# EUROPEAN PATENT SPECIFICATION

(11) **EP 3 480 424 B1**
(45) Date of publication and mention of the grant of the patent: **24.06.2020**
(21) Application number: 18203614.5
(22) Date of filing: 31.10.2018
(51) Int. Cl.: F01C 21/08, F01C 21/10, F04C 2/344, A22C 7/00, F01C 1/344

(54) **POSITIVE-DISPLACEMENT PUMP**
DREHSCHIEBERPUMPE
POMPE À DÉPLACEMENT POSITIF

(30) Priority: 02.11.2017 IT 201700124540
(43) Date of publication of application: 08.05.2019
(73) Proprietor: Borgo, Antonio, 36016 Thiene (IT)
(72) Inventor: Borgo, Antonio, 36016 Thiene (IT)
(74) Representative: Torti, Carlo Maria Emilio

(56) References cited:
- WO-A2-2013/107815
- US-A- 2 581 160
- US-A- 2 957 429
- US-A- 3 902 829
- US-A- 5 509 793
- US-B1- 7 080 623

## Description

### Field of the invention

The present invention relates to a positive-displacement pump and to an apparatus for preparing sausages and similar products equipped with said positive-displacement pump. In particular, the present invention relates to a positive-displacement pump of the vane type and to an apparatus equipped with said positive-displacement pump of the vane type, wherein the positive-displacement pump and the apparatus according to the present invention make it possible to efficiently manage the processing and stuffing of soft mixtures, e.g. of mixtures for salami, sausages, mortadella and other similar types of stuffed food products, but also of vegetable-based mixtures and/or sausages, such as soy-based mixtures or the like.

### Background art

The use of positive-displacement pumps for various purposes is known in the prior art, in particular for preparing sausages of the salami type, i.e. obtained by filling a casing with a soft mixture based on minced meat, fat and/or lard and other components and/or ingredients.

In particular, food products, such as salami, mortadella and sausages, are commonly prepared by using an apparatus which substantially comprises a hopper adapted to contain a mixture, and a positive-displacement pump placed at the discharge opening of the hopper, wherein the mixture leaving the hopper is captured by the positive-displacement pump and pumped by it through an expulsion tube to which a casing was previously applied. In this manner, the casing, either of animal origin or synthetic depending on the sausage to be prepared, is filled with the mixture and successively tied or clamped at its ends, also in this case depending on the type of sausage.

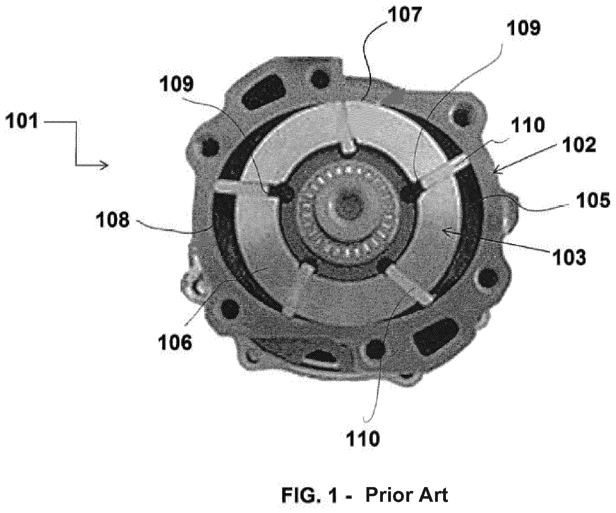

Figure 1 shows a plan view of a positive-displacement pump 101 according to the prior art.

As depicted, the pump 101 substantially consists of a fixed stator 102, which comprises an outer jacket which defines an inner space 105 in which a rotating rotor 103 is accommodated. The rotor 103 further comprises a main body 106 delimited by a cylindrical outer surface 107, wherein, on the contrary, the inner surface 108 of the outer jacket of the stator 102 has substantially elliptic or oblong plan development, and therefore wherein the inner space 105 is not entirely occupied by the rotor 103. The rotor is made to rotate by means of a motor (not shown in figure 1 for the sake of clarity), wherein the main body 106 comprises a plurality of seats or radial grooves 109, in each of which a vane 110 is accommodated, wherein the vanes 110, during the rotation of the rotor 103 are thus brought in rotation by the main body 106. Furthermore, each of the vanes 110 can translate in radial direction (transverse with respect to the rotation axis), between a first position, in which its end portion opposite to the rotation axis is placed at the outer surface 107 of the main body 106 and a second position, in which its end portion opposite to the rotation axis protrudes from the main body 106 beyond its outer surface 107 and abuts against the inner surface 108 of the stator 102.

During the rotation of the main body 106, by virtue of the different shape of the inner surface 108 of the jacket of the stator 102 and of the outer surface 107 of the body 106 of the rotor 103, each of the vanes 110 is alternately pushed into the body 103 against the bias of a corresponding spring (when its free end opposite to the rotation axis meets the portion of the surface 108 positioned at a distance from the rotation axis equal to the radius of the body 103) and towards the outside of the body 103 (by virtue of the elastic bias of the spring and when is located at the portions of the inner surface 108 placed at distances from the rotation axis greater than the radius of the main body 106), the free end portion (opposite to the rotation axis) of each vane 110 thus remaining always in contact with the inner surface 108 during the rotation of the main body 106.

The positive-displacement pumps according to the prior art of the type described above, although appreciable from many points of view (e.g. reliability, yield, constructive simplicity etc.), are however not free from drawbacks.

A first drawback is due to the inevitable accumulation of mixture on the inner surface 108 of the stator 102, especially as the working hours increase, and the consequent, inevitable loss of elasticity of the springs, up even to the loss of contact between the free end of one or more vanes 110 and the inner surface 108. A second drawback, arising from the first, is related to the fact that the mixture inevitably accumulated must necessarily be removed but the removal of residues of mixture necessarily requires disassembling the pump, in particular removing the rotor 103, and therefore a considerable loss of time.

Furthermore, a third drawback is related to the fact that part of the mixture trapped between each of the vanes 110 and the surface 108 is in all cases dragged and rubbed against the surface 108, with consequent excessive heating and deterioration and even risk of contaminating the rest of the mixture.

Further examples of positive-displacement pumps according to the prior art are known from US 5509793, US 3902829, US 2581160, US 7080623, US 2957429.

Therefore, it is a primary object of the present invention to provide a positive-displacement pump which overcomes or at least minimizes the disadvantages encountered in the positive-displacement pumps of known type and summarized briefly above.

In particular, it is an object of the present invention to provide a positive-displacement pump that makes it possible to avoid unwanted accumulations of residues of mixture between rotor and stator, and which therefore makes it possible to ensure the desired quality of the mixture preserving it from unwanted contamination by residues which are overheated and/or damaged by dragging. Furthermore, according to the present invention, in the case of undesired accumulations of residues of mixture, it must be possible to remove said residues of mixture by means of simple and fast operations and without requiring the removal of the rotor.

Finally, it is a further object of the present invention to suggest a positive-displacement pump which can be manufactured and assembled at low and competitive costs, which is very reliable and which guarantees products conforming with the typical criteria and needs of sausage processing and/or preparation.

### Summary of the invention

The present invention is based on the general consideration according to which the drawbacks affecting the positive-displacement pumps of known type can be overcome or at least minimized by a positive-displacement pump in which the rotor does not rotate with respect to the jacket of the stator but rather comprises an outer, and therefore rotating, jacket itself.

A second consideration underlying the present invention is related to the fact that further drawbacks encountered in the pumps according to the prior art can be overcome or at least minimized by means of a pump in which the vanes of the rotor can translate longitudinally, and thus along a direction parallel to the rotation axis of the rotor instead of radially (along a direction perpendicular to the rotation axis).

In view of the above, and in particular in view of the problems and/or drawbacks affecting positive-displacement pumps according to the prior art, according to the present invention there are provided a positive-displacement pump as claimed in claim 1 and an apparatus for preparing sausages and similar food products as claimed in claim 9.

According to an embodiment, a positive-displacement pump comprises: a rotor which comprises a substantially cylindrical shaped main body and is adapted to be rotated about a rotation axis substantially coincident with its own longitudinal symmetry axis, wherein said main body defines a plurality of housing seats, each of said housing seats extending along both a first extension direction substantially parallel to said longitudinal symmetry axis and along a second radial direction perpendicular to said first direction, said rotor comprising a plurality of vanes, each of said vanes being housed in one of said corresponding grooves, wherein said vanes are therefore brought in rotation during the rotation of said main body, wherein each of said vanes can translate alternatively in two opposite directions of translation along a direction substantially parallel to said rotation axis of said main body.

According to an embodiment, said rotor comprises a jacket integral with the said main body and defined by two cylindrical, concentric and continuous surfaces, and centered on said rotation axis.

According to an embodiment, said main body comprises a substantially cylindrical central portion centered on said rotation axis, wherein the difference between the radius of the inner surface of said jacket and the radius of said central portion substantially corresponds to the extension of each of said housing seats in said second radial direction.

According to an embodiment, said pump comprises a stator, wherein said stator comprises an upper cover and a lower cover positioned in opposite positions with respect to said rotor in a direction substantially longitudinal and parallel to said rotation axis.

According to an embodiment, at least either said upper cover or lower cover defines means adapted to translate said vanes during the rotation of said main body.

According to an embodiment, said means, adapted to translate said vanes, comprise a protrusion which extends from a first surface of either said upper cover or lower cover facing said rotor, wherein said protrusion comprises a first portion which defines a cam surface, the distance from said first surface facing said rotor of which varies progressively from a minimum substantially equal to zero to a maximum, and wherein during the rotation of said main body, the progressive contrast between said first cam surface and each of said vanes, in succession, results in the progressive translation of each of said vanes, in succession, away from said first surface from said first surface from which said protrusion extends. According to an embodiment, said lower cover or said upper cover which does not comprise said at least one protrusion comprises a recess adapted to allow the translation of each of said vanes, in succession, away from the surface facing towards said rotor, wherein said recess comprises a first portion which defines a second cam surface, the depth of which, with respect to a second surface facing towards said rotor, varies from a minimum substantially equal to zero to a maximum. According to an embodiment, said protrusion comprises a second portion which defines a third cam surface, the distance of which, from said first surface facing said rotor, varies progressively from said maximum to said minimum substantially equal to zero to a maximum, said second portion of said protrusion being therefore adapted to allow the translation of each of said vanes, in succession, towards said first surface from which said protrusion extends. According to an embodiment, said recess comprises a second portion which defines a fourth cam surface, the depth of which, with respect to said second surface facing said rotor, varies progressively from said maximum to said minimum substantially equal to zero, wherein during rotation of said main body, the progressive contrast between said fourth cam surface and each of said vanes, in succession, therefore translates into the progressive translation of each of said vanes, in succession, towards said first surface from which said protrusion extends.

The present invention further relates to an apparatus for preparing sausages and similar food products, said apparatus comprising a hopper for feeding food mixtures and a positive-displacement pump (1) arranged in order to capture said mixtures leaving said hopper, said positive-displacement pump is a positive-displacement pump according to any one of the embodiments of the present invention.

Further possible embodiments of the present invention are defined in the claims. The expression "food mixture" is used in this context and in the appended claims to refer to any soft mixture based on meat or vegetables, such as mixtures for any type of sausages, salami or stuffed food product, but also vegetable-based mixtures, as mixtures of soy and the like.

### Brief description of the figures

The present invention is illustrated below in greater detail by means of the detailed description of its embodiments provided by way of non-limiting example as depicted in the accompanying drawings, where
- Figure 1 shows a top plan view of a positive-displacement pump according to the prior art;
- Figures 2 show side views in partial longitudinal section and a top plan view of an embodiment of a positive-displacement pump according to the present invention;
- Figures 3 show a plan view from above, a perspective view in partial section and a cross section view of the rotor of the positive-displacement pump according to one embodiment of the present invention;
- Figures 4 show a top plan view, a perspective view and side views in partial section of a component of the stator of the positive-displacement pump according to an embodiment of the present invention;
- Figures 5 show a top plan view, a perspective view and side views in partial section of a component of the stator of the positive-displacement pump according to an embodiment of the present invention.

The positive-displacement pump according to the present invention is applied in particularly advantageous manner in the preparation of stuffed food products, such as salami, mortadella, sausages and similar stuffed food products, but also vegetable-based stuffed food products, this being the reason why, hereinafter, the pump according to the present invention will be described with particular reference to its use for the production of stuffed products of the aforesaid type.

However, the possible applications of the present invention are not limited to the production of sausages; on the contrary, the pump according to the present invention lends itself to use in different fields in which the pumping of soft mixtures is required.

### Detailed description of the present invention

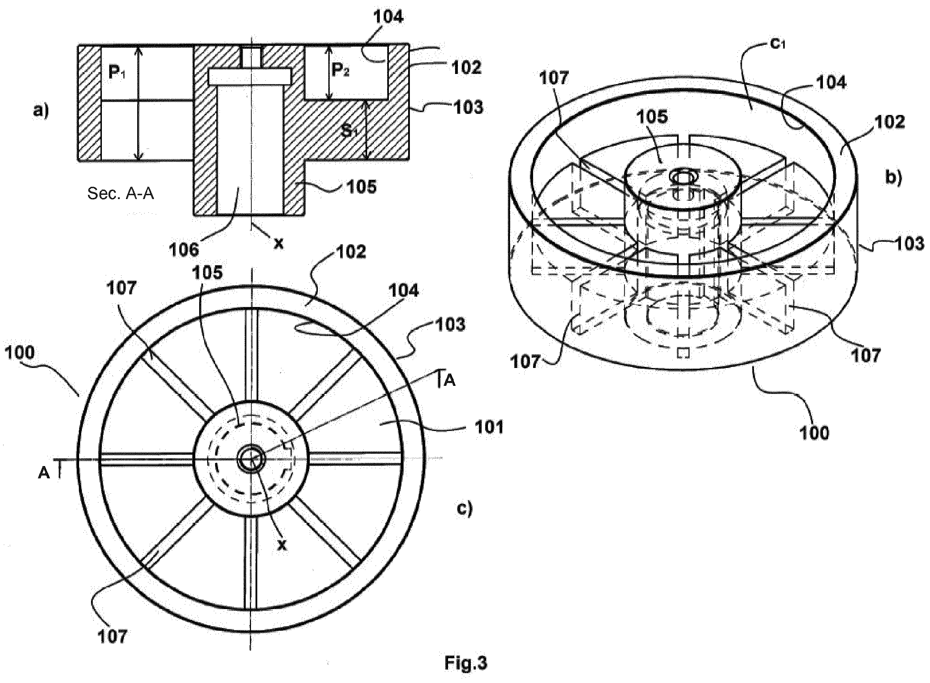

In figure 3, reference numeral 100 identifies a rotor of a positive-displacement pump according to an embodiment of the present invention. As shown, the rotor 100 comprises a main body 101, which is substantially cylindrical and thus centered about a longitudinal symmetry axis. The main body 101 comprises a central portion 105, also cylindrical and centered about a longitudinal symmetry axis, the central portion 105 defining an inner cavity 106 adapted to be engaged by (fitted on) a rotation shaft (not shown in the figures), e.g. of an electric motor or made to rotate by a similar power source, precisely for rotating the main body 101, and hence the entire rotor 100, about a rotation axis X substantially coincident with the longitudinal symmetry axis of the main body 101.

Said main body 101 comprises a plurality of housing seats 107, each extending along a first direction of extension parallel to the rotation axis X and a second radial direction and therefore perpendicular to the rotation axis X. Moreover, as shown in figures 3, the rotor 100 comprises an outer jacket 102 cylindrical and integral (in particular, made in a one piece, e.g. by casting, molding or extrusion or similar processes) with the main body 101, wherein said outer jacket 102 is radially delimited by an inner surface 104 and an outer surface 103, both cylindrical and concentric and so centered on the rotation axis X. It is therefore possible to appreciate how the difference between the radius of the inner surface 104 and the radius of the outer cylindrical surface of the central portion 105 defines the extension of the seats 107 in said second extension direction. Furthermore, the outer jacket 102 has longitudinal extension P1, wherein the thickness S1 of the main body 101 (and in particular of the portion of the main body 101 between the central portion 105 and the outer jacket 102) is less than the longitudinal extension P1 of the outer jacket 102, wherein the outer jacket 102 and the central portion 105 define a cavity C1 of lesser depth (in the longitudinal direction) P2 than the thickness S1, wherein said thickness S1 corresponds to the depth, i.e. to the extension in said first direction of each of the seats 107.

A blade or movable plate is housed (the blades or plates not being shown for reasons of clarity) in each of the seats 107, each of said blades or plates being movable alternately in two opposite directions of translation and along a direction substantially parallel to the rotation axis X according to methods described in more detail below. Each blade or plate has a radial extension substantially equal to the radial extension of the corresponding seat 107 in said second direction of extension, the extension of each blade or plate in said first direction of extension (parallel to the rotation axis X) being substantially equal to the longitudinal extension P1 of the outer jacket 102.

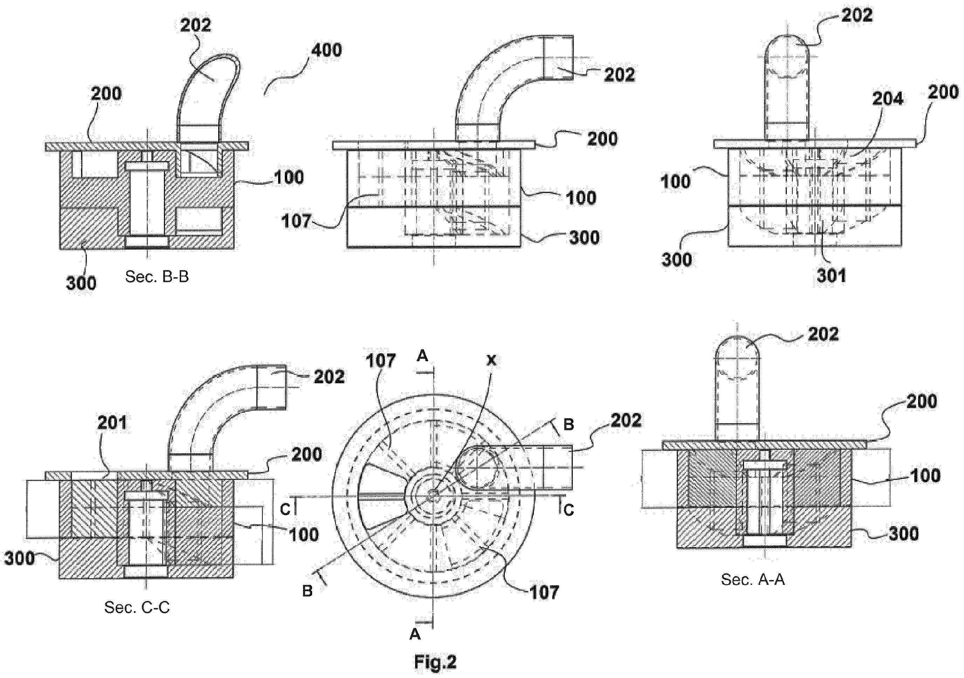

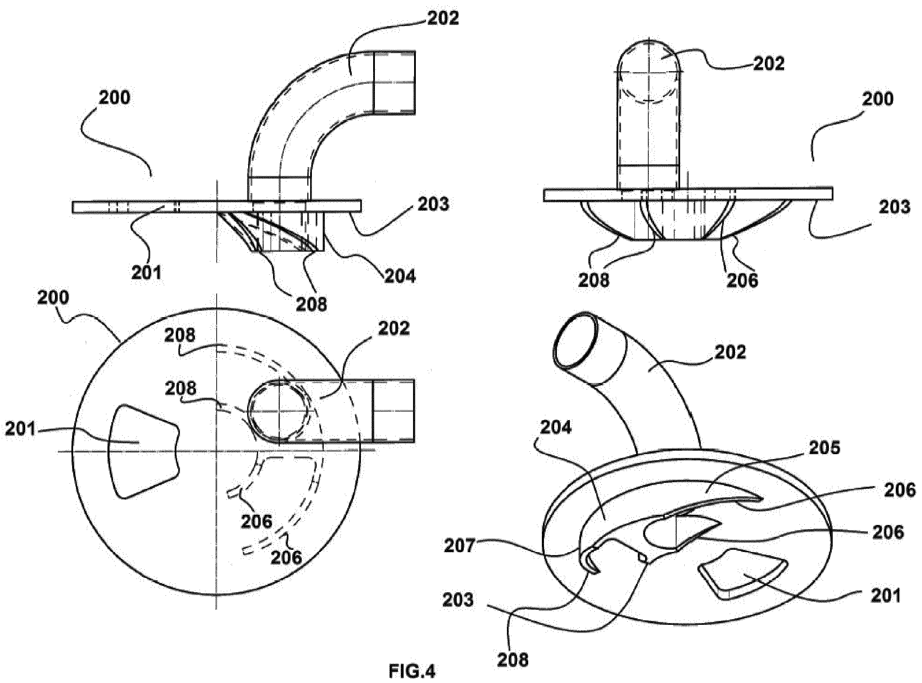

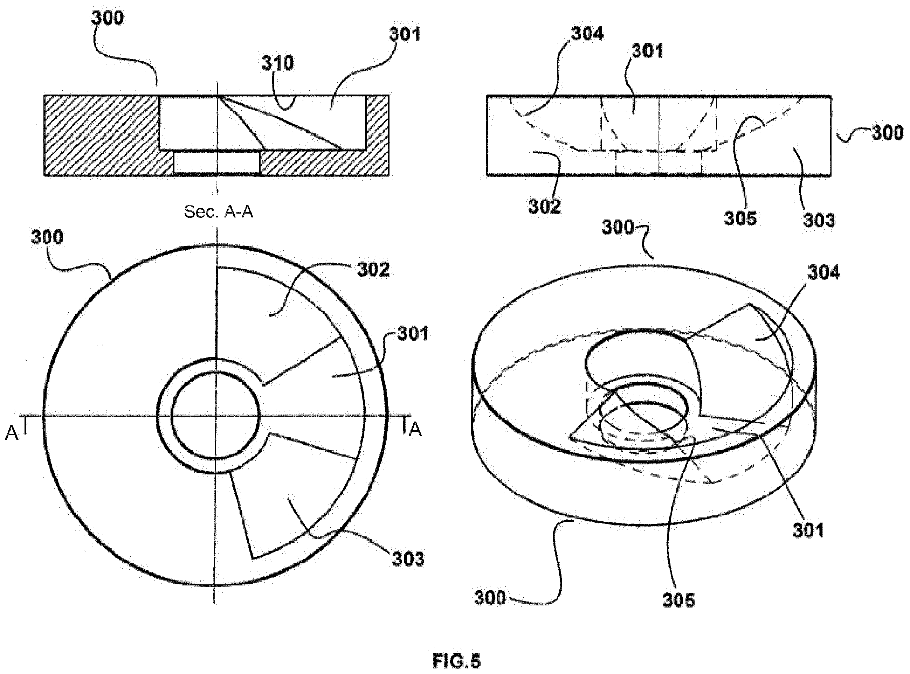

From the above, it is apparent that the rotation of the rotor 100 is obtained by rotating the central portion 105, wherein the rotation of the central portion 105 results in the simultaneous rotation of the main body 101 and of the outer jacket 102, as well as of the blades or plates housed in the respective seats 107, wherein the rotation of the rotor 107 also results in the translation of the blades or plates alternately in two opposite directions of translation (upwards and downwards with respect to figures 2a and 2b), by virtue of the conformation of the stator described below with reference to figures 4 and 5.

In Figures 4, reference numeral 200 in fact identifies a first component of a stator (said first component being also named upper cover, for reasons which will be more apparent from the following description), wherein said upper cover 200, with circular plan shape and with diameter substantially coincident with the diameter of the outer surface 103 of the jacket 102, comprises a through opening 201 and a discharge pipe 202 for respectively introducing the material to be pumped into the pump and discharging it from the pump, e.g. a soft mixture for preparing sausages, in particular for stuffed food products. The upper cover has a circular shape with radius substantially coincident with that of the outer cylindrical surface 103 of the jacket 102 and is adapted to be positioned with respect to the rotor 100 so as to close the circular-crown-shaped cavity C1 described above and defined precisely by the outer jacket 102, by the central portion 105 and by main body 101 (with thickness S1) of the stator 100. A protrusion 204 of variable extension or thickness from a minimum substantially equal to zero to a maximum extends from the surface 203 of the cover 200 intended to face the aforesaid cavity C1. In particular, the protrusion 204, curved with center of curvature substantially corresponding to the rotation axis X, comprises a first portion 205 which defines two cam surfaces 206, curved and also with a center of curvature substantially coinciding with the rotation axis X, the distance of which from the surface 203 varies continuously, indeed increasing between the aforesaid minimum substantially equal to zero and said maximum. The protrusion 204 further comprises a second portion 207 which defines two curved cam surfaces 208 and also with a center of curvature substantially coinciding with the rotation axis X, wherein the distance between said two surfaces 208 from the surface 203 varies by decreasing from said maximum up to the aforesaid minimum equal to zero. Finally, the protrusion 204 comprises a third intermediate portion arranged between said first portion 205 and second portion 207, wherein the distance of the surface of said third portion from the surface 203 is substantially constant and equal to the aforesaid maximum.

In substantially corresponding way, the lower cover 300 (figures 5 of the stator), having circular plan and diameter substantially coincident with the diameter of the outer surface 103 of the jacket 102, is intended to be positioned on the opposite side with respect to the upper cover 200, and comprises a recess 301 with arc-shaped extension and a depth variable from a minimum substantially equal to zero to a maximum. In particular, the recessed portion 301 comprises a first portion 302 which defines a surface 304, the distance of which from a flat reference surface and perpendicular to the axis X (e.g. surface 310) varies from a minimum substantially equal to zero to a maximum, said recess 301 comprising a second portion 303 which defines a surface 305, the distance of which from the flat reference surface (e.g. surface 310) itself varies from a maximum to a minimum substantially equal to zero. Finally, said recess comprises a third intermediate portion interposed between said first portion 302 and second portion 303, wherein the depth of said third surface is substantially constant and equal to the aforesaid maximum.

Figures 2 show the essential aspects of the assembled positive-displacement pump 400, in particular with the rotor 100 arranged between the upper cover 200 and the bottom cover 300 which form the stator. In particular, the upper covers 200 and 300 are oriented in so that the recess 301 of the lower cover 300 is positioned at the protrusion 204 of the upper cover 200. The operation of the pump according to the embodiment of the present invention shown in the figures can be summarized as follows. Assuming, for the sake of clarity, that a blade or plate with extension in said first direction substantially parallel to the axis X equal to P1 is housed in each of the seats 107 of the rotor 100, further assuming that the rotor 100 is put in rotation with respect to the stator and therefore with respect to the lower cover 300 and upper cover 200 fixed with respect to each other), it is apparent that the blades or plates, brought in rotation by the rotor 100, during their rotary motion are engaged in succession the protrusion 204 of the upper cover 200, the protrusion 204 being in particular positioned in the cavity in form of a circular ring C1 of depth P2. Hereinafter, for the sake of brevity and clarity, we will describe the translation of a single blade or plate, the translation methods along a direction substantially parallel to the rotation axis X being common to all the blades or plates.

The first contact or mutual engagement between the blade or plate and the projection 204 occurs in particular with the cam surfaces 206 or 208 according to the direction of rotation of the rotor 100. The engagement of the surfaces 206 or 208 by the blade or plate results in a longitudinal thrust on the blade or plate away from the surface 203 of the upper cover 200, said distancing movement being possible by virtue of the presence of the recess 301. Continuing with the rotation of the rotor 100, the progressive engagement of the surfaces 206 or 208 by the blade results in the progressive translation of the blade away from the surface 203, the blade thus progressively engaging the corresponding surface 304 or 305 of the recess 301. When the portion of the surfaces 206 or 208, the distance of which from the surface 203 is maximum, is reached, the blade will simultaneously reach the portion of the recess 301 with maximum depth, i.e. at which the distance of the surface 304 or 305 from a reference surface is flat and is maximum. During the next step of rotation, there is no further movement in the longitudinal direction of the blade, where indeed, as anticipated, both the protrusion 204 and the recess 301 comprise a flat central portion.

On the contrary, during the subsequent step of rotation, the blade will gradually engage the cam surface 304 or 305 of the recess 301, thus being translated again in opposite direction and therefore towards the surface 203 of the cover 200, said approaching translation being possible in particular by virtue of the presence of the corresponding portion of the protrusion 204.

When it is not at the projection 204, and so not even at the recess 301, the plate or blade does not undergo longitudinal translation, remaining on the contrary fixed and positioned so as to scrape the surface 203 of the cover 200.

It is apparent that a mixture introduced into the pump 400 through the through opening 201 is conveyed into the pipe 202 and thus ejected by virtue of the translation motion of the blades or plates described above.

It has thus been demonstrated by means of the preceding detailed above description of the embodiments of the present invention as depicted in the drawings that the present invention allows to achieve the predetermined goals and/or results. In particular, in the case of the pump according to the present invention, since the plates or blades are translated in the longitudinal direction and the outer jacket is part of the rotor, the accumulation of the mixture between the blades and the outer jacket is prevented (which in the pumps according to the prior art is a part of the stator) as so is the feeding with the inevitable overheating of portions of the mixture. Furthermore, in the unlikely case of accumulations of mixture, they can be removed by simply removing one of the upper or lower covers, with no need to remove the rotor. Furthermore, the positive-displacement pump according to the present invention can be made and assembled according to substantially simple methods and therefore at low cost, and ensures a high degree of reliability and durability, precisely by virtue of the rather simple shape of its component parts.

Although the present invention was explained in detail by means of a detailed description of the embodiments thereof as depicted in the drawings the present invention is not obviously limited to the embodiments described above and shown on the drawings. On the contrary, all the variants or changes to the embodiments described below and depicted in the drawings that will appear obvious and immediate to a person skilled in the art have to be regarded as falling within the scope of the present invention. For example, elastic contrast means can be provided in each of the seats 107, e.g. a spring, wherein in this case the translation of each plate away from the upper cover occurs against the elastic bias applied by the spring, while the approaching translation motion occurs by virtue of or is at least promoted by the spring, in this case being possible to avoid the recess 301 in the lower cover.

The scope of the present invention is thus defined by the claims.

## Claims

1. A positive-displacement pump (400) for preparing stuffed products, said positive-displacement pump comprising:
a rotor (100) which comprises a substantially cylindrical-shaped main body (101) and is adapted to be made to rotate about a rotation axis (X) substantially coincident with its own longitudinal symmetry axis, wherein said main body (101) defines a plurality of housing seats (107), each of said housing seats (107) extending along both a first extension direction substantially parallel to said longitudinal symmetry axis and along a second radial direction perpendicular to said first direction, a stator, said rotor (100) comprising a plurality of vanes, each of said vanes being housed in one of said corresponding housing seats (107), wherein said vanes are therefore brought in rotation during the rotation of said main body (101), wherein each of said vanes can translate alternatively in two opposite directions of translation along a direction substantially parallel to said rotation axis (X) of said main body (101), **characterized in that** said rotor (100) comprises a jacket (102) integral with said main body (101) and defined by a first outer, continuous cylindrical surface (103) and by an inner surface (104), cylindrical and concentric to said outer surface (103), said outer surface (103) and inner surface (104) being concentric and centered on said rotation axis (X), and **in that** the longitudinal extension of each of said vanes along a direction parallel to said rotation axis (X) corresponds to the longitudinal extension (P1) along a direction parallel to said rotation axis (X) of said outer surface (103) of said jacket (102).

2. The positive-displacement pump (400) according to claim 1, **characterized in that** said main body (101) comprises a central portion (105) substantially cylindrical and centered on said rotation axis (X), **in that** said central portion (105) and said outer jacket (102) define a circular-crown plan shaped cavity (C1), **in that** the longitudinal extent or depth (P2) of said cavity (C1) at each sector or portion of said main body (101) confined by two adjacent housing seats (107) is equal to the difference between said longitudinal extension (P1) of said outer surface (103) and the thickness (S1) of said main body (101) at each sector or portion confined by two adjacent housing seats (107), and **in that** the difference between the radius of the inner surface (104) of said jacket (102) and, the radius of said central portion (105) substantially corresponds to the extension of each of said housing seats (107) in said second radial direction.

3. The positive-displacement pump (400) according to any one of the claims from 1 to 2, **characterized in that** said stator comprises an upper cover (200) and a lower cover (300) positioned in opposite positions in respect to said rotor in direction substantially longitudinal and parallel to said rotation axis (X), and **in that** both said upper cover (200) and lower cover (300) are circular plan shaped and have a diameter corresponding to that of said outer surface (103) of said jacket (102).

4. The positive-displacement pump (400) according to claim 3, **characterized in that** at least either said upper cover (200) or said lower cover (300) defines means adapted to translate said vanes during the rotation of said main body (101).

5. The positive-displacement pump (400) according to claim 4, **characterized in that** said means adapted to translate said vanes comprise a protrusion (204) which extends from a first surface of at least either said upper cover (200) or said lower cover (300) facing towards said rotor (100), wherein said protrusion (204) comprises a first portion (205) which defines a cam surface (206), the distance of which from said first surface facing towards said rotor (100) varies progressively from a minimum substantially equal to zero to a maximum, and wherein during the rotation of said main body (101), the progressive contrast between said first cam surface (206) and each of said vanes, in succession, results in the progressive translation of each of said vanes, in succession, away from said first surface from which said protrusion (204) extends.

6. The positive-displacement pump according to claim 5, **characterized in that** said lower cover (300) or said upper cover (200) which does not comprise said at least one protrusion (204) comprises a recess (301) adapted to enable the translation of each of said vanes, in succession, away from said first surface facing said rotor (100), and **in that** said recess (301) comprises a first portion (302) which defines a second cam surface (304) the depth of which, with respect to a second surface facing towards said rotor (100), varies from a minimum substantially equal to zero to a maximum.

7. The positive-displacement pump according to any one of the claims 5 and 6, **characterized in that** said protrusion (204) comprises a second portion (207) which defines a third cam surface (208), the distance of which from said first surface facing towards said rotor (100) varies progressively from said maximum to said minimum substantially equal to zero, said second portion (207) of said protrusion being therefore adapted to allow the translation of each of said vanes, in succession, towards said first surface from which said protrusion (204) extends.

8. The positive-displacement pump according to any one of the claims from 5 to 7, **characterized in that** said recess (301) comprises a second portion (303) which defines a fourth cam surface (305), the depth of which, with respect to said second surface facing towards said rotor (100), varies progressively from said maximum to said minimum substantially equal to zero, wherein during rotation of said main body (101), the progressive contrast between said fourth cam surface (305) and each of said vanes, in succession, therefore results into the progressive translation of each of said vanes, in succession, towards said first surface from which said protrusion (204) extends.

9. An apparatus for preparing sausages and similar food products, said apparatus comprising a hopper for feeding food mixtures and a positive-displacement pump (400) arranged in order to capture said mixtures leaving said hopper, **characterized in that** said positive-displacement pump (400) is a positive-displacement pump according to any one of the previous claims from 1 to 8.

## Patentansprüche

1. Drehschieberpumpe (400) zur Herstellung von gefüllten Produkten, wobei die Drehschieberpumpe Folgendes umfasst:
einen Rotor (100), der einen im Wesentlichen zylinderförmigen Hauptkörper (101) umfasst und so ausgelegt ist, dass er sich um eine Rotationsachse (X) dreht, die im Wesentlichen mit der eigenen Längssymmetrieachse zusammenfällt, wobei der Hauptkörper (101) eine Vielzahl von Gehäusesitzen (107) definiert und jeder der Gehäusesitze (107) sich sowohl entlang einer ersten Erstreckungsrichtung im Wesentlichen parallel zur Längssymmetrieachse als auch entlang einer zweiten radialen Richtung senkrecht zur ersten Richtung erstreckt; einen Stator, wobei der Rotor (100) eine Vielzahl von Flügeln umfasst und jeder der Flügel in einem der entsprechenden Gehäusesitze (107) untergebracht ist, und die Flügel dadurch während der Rotation des Hauptkörpers (101) in Rotation gesetzt werden, wobei jeder der Flügel abwechselnd in zwei entgegengesetzte Verschieberichtungen entlang einer Richtung verschoben werden kann, die im Wesentlichen parallel zur Rotationsachse (X) des Hauptkörpers (101) ist, **dadurch gekennzeichnet, dass** der Rotor (100) einen Mantel (102) umfasst, der einstückig mit dem Hauptkörper (101) ausgebildet ist und durch eine erste durchgehend zylindrische Außenfläche (103) bzw. durch eine zur Außenfläche (103) zylindrischen und konzentrischen Innenfläche (104) definiert ist, wobei die Außenfläche (103) und die Innenfläche (104) konzentrisch und zentriert auf der Drehachse (X) angeordnet sind, und dass die Längserstreckung von jedem der Flügel entlang einer zur Rotationsachse (X) parallelen Richtung, der Längserstreckung (P1) entlang einer zur Rotationsachse (X) parallelen Richtung der Außenfläche (103) des Mantels (102) entspricht.

2. Drehschieberpumpe (400) nach Anspruch 1, **dadurch gekennzeichnet, dass** der Hauptkörper (101) einen im Wesentlichen zylindrischen und auf der Rotationsachse (X) zentrierten Mittelabschnitt (105) umfasst, dass der Mittelabschnitt (105) und der Außenmantel (102) einen Hohlraum (C1) mit einem runden kronenförmigen Grundriss definieren, dass die Längserstreckung oder - tiefe (P2) des Hohlraums (C1) an jedem Sektor oder Abschnitt des durch zwei benachbarte Gehäusesitze (107) begrenzten Hauptkörpers (101) gleich ist der Differenz zwischen der Längserstreckung (P1) der Außenfläche (103) und der Dicke (S1) des Hauptkörpers (101) in jedem durch zwei benachbarte Gehäusesitze (107) begrenzten Sektor oder Abschnitt, und dass, die Differenz zwischen dem Radius der Innenfläche (104) des Mantels (102) und dem Radius des Mittelabschnitts (105) im Wesentlichen der Erstreckung jedes der Gehäusesitze (107) in der zweiten Radialrichtung entspricht.

3. Drehschieberpumpe (400) nach irgendeinem der Ansprüche von 1 bis 2, **dadurch gekennzeichnet, dass** der Stator eine obere Abdeckung (200) und eine untere Abdeckung (300) umfasst, die in entgegengesetzten Positionen in Bezug auf den Rotor in einer zur Rotationsachse (X) im Wesentlichen longitudinalen und parallelen Richtung positioniert sind und, dass sowohl die obere Abdeckung (200) als auch die untere Abdeckung (300), einen kreisförmigen Grundriss haben und einen Durchmesser aufweisen, der demjenigen der Außenfläche (103) des Mantels (102) entspricht.

4. Drehschieberpumpe (400) nach Anspruch 3, **dadurch gekennzeichnet, dass** mindestens entweder die obere Abdeckung (200) oder die untere Abdeckung (300) Mittel definiert, die dazu ausgelegt sind, die Flügel während der Drehung des Hauptkörpers (101) zu verschieben.

5. Drehschieberpumpe (400) nach Anspruch 4, **dadurch gekennzeichnet, dass** die zum Verschieben der Flügel ausgelegten Mittel einen Vorsprung (204) umfassen, der sich von einer ersten Oberfläche mindestens der oberen Abdeckung (200) oder der unteren Abdeckung (300) in Richtung des Rotors (100) erstreckt, wobei der Vorsprung (204) einen ersten Abschnitt (205) umfasst, der eine Nockenfläche (206) definiert, deren Abstand von der ersten, dem Rotor (100) zugewandten Oberfläche fortschreitend von einem Minimum, das im wesentlichen gleich Null ist, bis zu einem Maximum variiert und wobei, während der Rotation des Hauptkörpers (101), der fortschreitende Kontrast zwischen der ersten Nockenfläche (206) und jedem der Flügel nacheinander, die fortschreitende Verschiebung jeder der Flügel nacheinander, weg von der ersten Oberfläche, von der sich der Vorsprung (204) erstreckt, bewirkt.

6. Drehschieberpumpe nach Anspruch 5, **dadurch gekennzeichnet, dass** die untere Abdeckung (300) oder die obere Abdeckung (200), welche den mindestens einen Vorsprung (204) nicht umfasst, eine Aussparung (301) umfasst, die angepasst ist, die Verschiebung jeder der Flügel nacheinander, weg von der ersten dem Rotor (100) zugewandten Oberfläche zu ermöglichen und, dass die Aussparung (301) einen ersten Abschnitt (302) umfasst, der eine zweite Nockenfläche (304) definiert, deren Tiefe, in Bezug auf eine zweite, dem Rotor (100) zugewandten Oberfläche, von einem Minimum, das im wesentlichen gleich Null ist, bis zu einem Maximum variiert.

7. Drehschieberpumpe nach irgendeinem der Ansprüche 5 und 6, **dadurch gekennzeichnet, dass** der Vorsprung (204) einen zweiten Abschnitt (207) umfasst, der eine dritte Nockenfläche (208) definiert, deren Abstand von der ersten, dem Rotor (100) zugewandten Oberfläche fortschreitend von dem Maximum bis zu dem Minimum, das im wesentlichen gleich Null ist, variiert, wobei der zweite Abschnitt (207) des Vorsprungs daher ausgelegt ist, die Verschiebung jeder der Flügel nacheinander in Richtung der ersten Oberfläche, von der sich der Vorsprung (204) erstreckt, zu ermöglichen/erlauben.

8. Drehschieberpumpe nach irgendeinem der Ansprüche von 5 bis 7, **dadurch gekennzeichnet, dass** die Aussparung (301) einen zweiten Abschnitt (303) umfasst, der eine vierte Nockenfläche (305) definiert, deren Tiefe in Bezug auf die zweite dem Rotor (100) zugewandten Oberfläche fortschreitend von dem Maximum bis zu dem Minimum, das im wesentlichen gleich Null ist, variiert, wobei während der Rotation des Hauptkörpers (101), aus dem fortschreitenden Kontrast zwischen der vierten Nockenfläche (305) und jedem der Flügel nacheinander, sich deshalb die fortschreitende Verschiebung jeder der Flügel nacheinander in Richtung der ersten Oberfläche, von der sich der Vorsprung (204) erstreckt, ergibt.

9. Gerät zum Herstellen von Würsten und ähnlichen Nahrungsmitteln, wobei das Gerät einen Trichter zum Zuführen von Lebensmittelmischungen und eine Drehschieberpumpe (400) umfasst, die zur Aufnahme der aus dem Trichter kommenden Mischungen angeordnet ist, **dadurch gekennzeichnet, dass** die Drehschieberpumpe (400) eine Drehschieberpumpe nach irgendeinem der vorhergehenden Ansprüchen von 1 bis 8 ist.

## Revendications

1. Pompe volumétrique (400) destinée à préparer des produits farcis, ladite pompe volumétrique comprenant :
un rotor (100) qui comprend un corps principal de forme sensiblement cylindrique (101) et est conçu pour être entraîné en rotation autour d'un axe de rotation (X) qui coïncide sensiblement avec son propre axe de symétrie longitudinal, dans laquelle ledit corps principal (101) définit une pluralité d'assises de logement (107), chacune desdites assises de logement (107) s'étendant à la fois le long d'une première direction d'extension sensiblement parallèle audit axe de symétrie longitudinal et le long d'une seconde direction radiale perpendiculaire à la première direction, un stator, ledit rotor (100) comprenant une pluralité d'aubes, chacune desdites aubes étant logée dans l'une desdites assises de logement correspondantes (107), dans laquelle lesdites aubes sont par conséquent entraînées en rotation pendant la rotation dudit corps principal (101), dans laquelle chacune desdites aubes peut effectuer une translation alternativement dans deux directions de translation opposées le long d'une direction sensiblement parallèle audit axe de rotation (X) dudit corps principal (101), **caractérisée en ce que** ledit rotor (100) comprend une chemise (102) intégrée audit corps principal (101) et définie par une première surface extérieure cylindrique continue (103) et par une surface intérieure (104), cylindrique et concentrique à ladite surface extérieure (103), lesdites surface extérieure (103) et surface intérieure (104) étant concentriques et centrées sur ledit axe de rotation (X), et **en ce que** l'extension longitudinale de chacune desdites aubes le long d'une direction parallèle audit axe de rotation (X) correspond à l'extension longitudinale (P1) le long d'une direction parallèle audit axe de rotation (X) de ladite surface extérieure (103) de ladite chemise (102).

2. Pompe volumétrique (400) selon la revendication 1, **caractérisée en ce que** ledit corps principal (101) comprend une partie centrale (105) sensiblement cylindrique et centrée sur ledit axe de rotation (X), **en ce que** ladite partie centrale (105) et ladite chemise extérieure (102) définissent une cavité en forme de couronne circulaire (C1), **en ce que** l'étendue ou la profondeur longitudinale (P2) de ladite cavité (C1) à chaque secteur ou partie dudit corps principal (101) confiné(e) entre deux assises de logement adjacentes (107) est égale à la différence entre ladite extension longitudinale (P1) de ladite surface extérieure (103) et l'épaisseur (S1) dudit corps principal (101) sur chaque secteur ou partie confiné(e) entre deux assises de logement adjacentes (107), et **en ce que** la différence entre le rayon de la surface interne (104) de ladite chemise (102) et le rayon de ladite partie centrale (105) correspond sensiblement à l'extension de chacune desdites assises de logement (107) dans ladite seconde direction radiale.

3. Pompe volumétrique (400) selon l'une quelconque des revendications 1 à 2, **caractérisée en ce que** ledit stator comprend un couvercle supérieur (200) et un couvercle inférieur (300) positionnés dans des directions opposées par rapport audit rotor dans une direction sensiblement longitudinale et parallèle audit axe de rotation (X), et **en ce que** ledit couvercle supérieur (200) et ledit couvercle inférieur (300) sont tous deux de forme circulaire et présentent un diamètre correspondant à celui de ladite surface extérieure (103) de ladite chemise (102).

4. Pompe volumétrique (400) selon la revendication 3 **caractérisée en ce qu'**au moins l'un dudit couvercle supérieur (200) et dudit couvercle inférieur (300) définit des moyens conçus pour faire effectuer une translation auxdites aubes pendant la rotation dudit corps principal (101).

5. Pompe volumétrique (400) selon la revendication 4, **caractérisée en ce que** lesdits moyens conçus pour faire effectuer une translation auxdites aubes comprennent une protubérance (204) qui s'étend depuis une première surface d'au moins l'un dudit couvercle supérieur (200) et dudit couvercle inférieur (300) faisant face audit rotor (100), dans laquelle ladite protubérance (204) comprend une première partie (205) qui définit une surface de came (206), dont la distance à partir de ladite première surface faisant face audit rotor (100) varie progressivement d'un minimum sensiblement égal à 0 à un maximum, et dans laquelle pendant la rotation dudit corps principal (101), le contraste progressif entre ladite première surface de came (206) et chacune desdites aubes, en succession, entraîne la translation progressive de chacune desdites aubes, en succession, à distance de ladite première surface à partir de laquelle s'étend la protubérance (204).

6. Pompe volumétrique (400) selon la revendication 5, **caractérisée en ce que** ledit couvercle inférieur (300) ou ledit couvercle supérieur (200) qui ne comprend pas ladite au moins une protubérance (204) comprend un évidement (301) conçu pour permettre la translation de chacune desdites aubes, en succession, à distance de ladite première surface faisant face audit rotor (100), et **en ce que** ledit évidement (301) comprend une première partie (302) qui définit une deuxième surface de came (304) dont la profondeur par rapport à une seconde surface faisant face audit rotor (100) varie d'un minimum sensiblement égal à 0 à un maximum.

7. Pompe volumétrique selon l'une quelconque des revendications 5 et 6, **caractérisée en ce que** ladite protubérance (204) comprend une seconde partie (207) qui définit une troisième surface de came (208), dont la distance par rapport à ladite première surface faisant face audit rotor (100) varie progressivement dudit maximum audit minimum sensiblement égal à 0, ladite seconde partie (207) de ladite protubérance étant par conséquent conçue pour permettre la translation de chacune desdites aubes, en succession, en direction de ladite première surface depuis laquelle s'étend ladite protubérance (204).

8. Pompe volumétrique (400) selon l'une quelconque des revendications 5 à 7, **caractérisée en ce que** ledit évidement (301) comprend une seconde partie (303) qui définit une quatrième surface de came (305) dont la profondeur par rapport à ladite seconde surface faisant face audit rotor (100) varie progressivement dudit maximum audit minimum sensiblement égal à 0, dans laquelle pendant la rotation dudit corps principal (101), le contraste progressif entre ladite quatrième surface de came (305) et chacune desdites aubes, en succession, entraîne par conséquent la translation progressive de chacune desdites aubes, en succession, à distance de ladite première surface à partir de laquelle s'étend la protubérance (204).

9. Appareil de préparation de saucisses et de produits alimentaires similaires, ledit appareil comprenant une trémie servant à distribuer des mélanges alimentaires et une pompe volumétrique (400) disposée de façon à saisir lesdits mélanges quittant ladite trémie, **caractérisé en ce que** ladite pompe volumétrique (400) est une pompe volumétrique selon l'une quelconque des revendications précédentes 1 à 8.
